Europäisches Patentamt

European Patent Office

Office européen des brevets

(19)

(11) EP 1 501 173 A2

(12) EUROPEAN PATENT APPLICATION

(43) Date of publication:
26.01.2005 Bulletin 2005/04

(51) Int Cl.7: H02K 53/00, H02K 51/00

(21) Application number: 03009571.5

(22) Date of filing: 28.04.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 10.03.2003 KR 2003014804

(71) Applicants:
• Song, Kwang, Heon
  Hapo-gu, Masan-city,
  Kyungsang-province 631-865 (KR)
• Kim, In Sook
  Youngsan-gu, Seoul, 140-809 (KR)
• Song, Jae, Hyeouk
  Hapo-gu, Masan-city,
  Kyungsang-province, 631-865 (KR)
• Song, Jae, Kyong
  Hapo-gu, Masan-city,
  Kyungsang-province, 631-865 (KR)
• Song, Jae, Eun
  Hapo-gu, Masan-city,
  Kyungsang-province, 631-866 (KR)

(72) Inventors:
• Song, Kwang, Heon
  Hapo-gu, Masan-city,
  Kyungsang-province 631-865 (KR)
• Kim, In Sook
  Youngsan-gu, Seoul, 140-809 (KR)
• Song, Jae, Hyeouk
  Hapo-gu, Masan-city,
  Kyungsang-province, 631-865 (KR)
• Song, Jae, Kyong
  Hapo-gu, Masan-city,
  Kyungsang-province, 631-865 (KR)
• Song, Jae, Eun
  Hapo-gu, Masan-city,
  Kyungsang-province, 631-866 (KR)

(74) Representative: Grosse, Wolfgang, Dipl.-Ing. et al
Patentanwälte
Herrmann-Trentepohl
Grosse - Bockhorni & Partner,
Forstenrieder Allee 59
81476 München (DE)

(54) **Apparatus for increasing turning force using magnetic force**

(57) Disclosed is an apparatus for increasing rotation force using a magnetic force capable of generating the electric power by increasing an initial driving force using permanent magnets opposed to each other and driving an electric generator using the increased turning force. The apparatus comprises a turning force increasing means including a rotary driving member receiving a power via a shaft thereof; and a rotary driven member disposed on the rotary driving and rotated by a magnetic force of the rotary driving member. Each of the rotary driving member and the rotary driven member includes a pair of covers at both ends thereof, and a plurality of magnets disposed between the covers along a periphery.

Fig.1

EP 1 501 173 A2

## Description

## BACKGROUND OF THE INVENTION

### Field of the Invention

The present invention relates to an apparatus for increasing turning force using magnetic force, and more particularly, to an apparatus for increasing turning force using a magnetic force capable of generating electricity by increasing an initial turning force using permanent magnets faced opposite to each other.

### Background of the Related Art

Generally, an electric generator is an device to transform mechanical energy received from an external power source into electric energy. A hydraulic turbine, an electric motor, a gasoline engine or the like may be utilized as the external power source.

Methods of generating the electric energy using the direct natural power as external power source include a water-power generation using the potential energy of water, and a wind-power generation. In addition, another methods of generating the electric power are a thermal power generation or a nuclear power generation by the use of natural resources such as coal or uranium collected from the nature. Recently, solar power generation using solar heat is in common use.

In the power generation using the external power source, the basic principle of power generation is based on the relationship between a magnetic field and electrons in a conductor, where as the conductor passes through magnetic flux, a voltage is induced at both ends of conductor generating the flow of electric current. At that time, a magnitude of the induced voltage E is determined by a multiplication of a flux density B, a length L of the conductor within the magnetic field, and a motion speed V of the conductor as following equation 1:

$$\text{Equation 1} \qquad E = BLV$$

The power generation inevitably requires the external power source for mechanical energy, and if the external power source fails to supply continuous mechanical energy, it is not possible to generate the electric power.

In case generating electric energy by using motor, the motor should be the same capacity with the output capacity of the generator. For example, to operate a 150KW capacity of generator, 150KW capacity of motor(ex. 4-pole 3-phase AC induction motor with 380V of input voltage and 150KW of output power) is required. In other words, 150KW capacity of motor could not operate power generator with the capacity of more than 150KW. As a result, as the power generation capacity increases, motor with larger capacity is needed.

## SUMMARY OF THE INVENTION

Accordingly, the present invention is directed to an apparatus for increasing turning force using a magnetic force that substantially obviates one or more problems due to limitations and disadvantages of the prior art.

It is an object of the present invention to provide an apparatus for increasing the turning force of motor using magnetic force, which is capable of operating the larger capacity of power generator than usual, with the help of the increased turning force of the motor.

To achieve these objects and other advantages in accordance with the purpose of the present invention as embodied and broadly described herein, there is provided an apparatus for increasing turning force with the use of magnetic force comprising: a rotary driving member receiving a power via a shaft thereof; the rotary driven member rotating by the magnetic force of the rotary driving member; a pair of covers fixed at the both ends of the rotary driving/driven member; and a plurality of magnets disposed around the rotary driving/driven member..

Each of the covers has a plurality of flat portions formed along an outer periphery.

The rotary driving member and the rotary driven member are disposed in such a way to maintain a desired gap between them.

Flat portions are inclined to one side, and each of the adjacent flat portions forms a desired angle, preferably 122°.

The magnets are accommodated within receptacles respectively, which are disposed on the flat portions of the covers with the open side of the receptacles closed by cover plates.

The receptacles and the cover plates are made of nonferrous metal.

The magnets are arranged in such a way that the magnets around the rotary driving member face the same polarity of the magnet of the rotary driven member, so as to apply repulsive force between the rotary driving member and the rotary driven member

The same number of the magnets is disposed on the rotary driving member and the rotary driven member.

The magnet is adapted to radiate the magnetic force through the cover plate only.

The apparatus further comprises a power-transmitting member for transmitting power from a power source to the rotary driving/driven member.

The power-transmitting member includes first to fourth gears. The first gear coaxially attached to the rotating driving member, transmit power to second, third, and finally to the fourth gear which is coaxially attached to the rotating driven member.

The turning force increasing means is coupled to an electric motor or diesel engine to receive the power.

The rotary driving member has a pulley coupled to a shaft of the electric motor via a belt.

The turning force increased by the turning force increasing means is used to operate a power generator.

The rotary driven member has a pulley coupled to a shaft of the power generator via a belt.

The turning force increasing means is disposed within a case which shield the radiation of the magnetic force.

The case includes an external cover made of stainless steel, and an internal cover made of wood.

The case has at least one hole for emitting the magnetic force at one side thereof.

Size and number of the hole can be altered depending upon the magnitude of magnetic force radiated from the rotating force increasing means disposed within the case.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a perspective view of an apparatus according to the present invention;

Fig. 2 is a partially cross-sectional view of a case according to the preset invention;

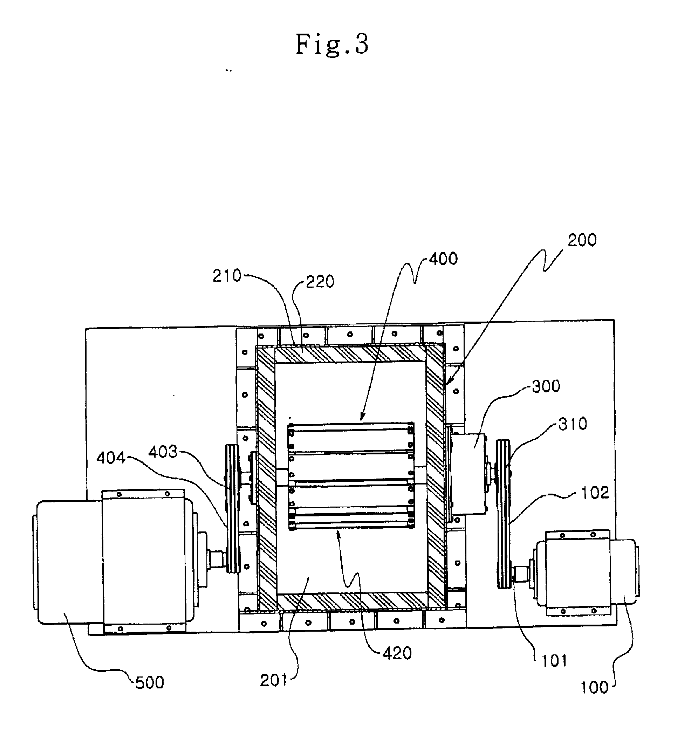

Fig. 3 is a plan view of Fig. 2;

Fig. 4 is a perspective view of an apparatus according to the present invention, in which a case is removed;

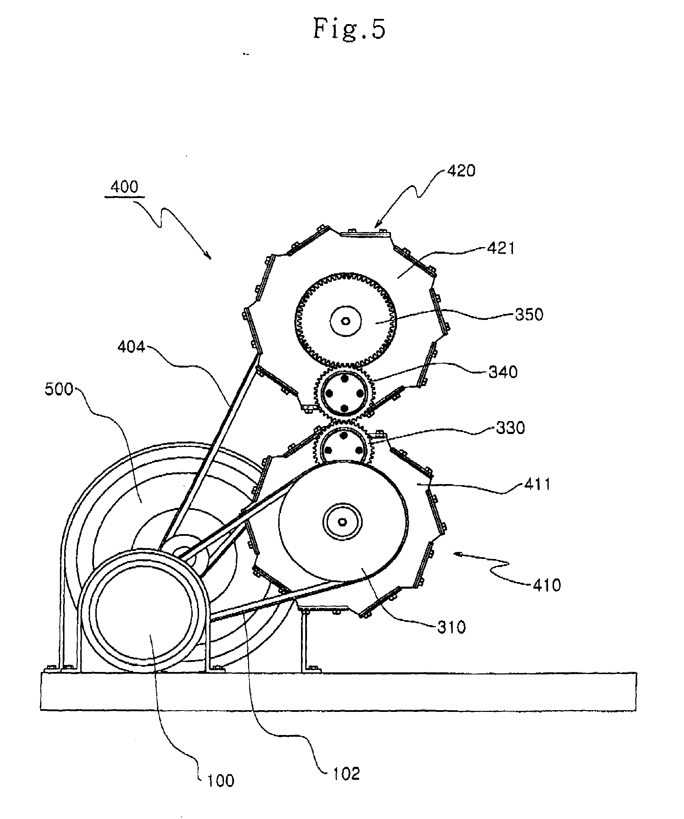

Fig. 5 is a side view of the apparatus shown in Fig. 4;

Fig. 6 is an exploded perspective view showing a rotary power increasing means according to the preset invention; and

Fig. 7 is a schematic view showing an interval and inclined angle between a pair of rotary power increasing members according to the preset invention.

## DETAILED DESCRIPTION OF PREFERRED EMBODIMENTS

Reference will now be made in detail to the preferred embodiment of the present invention, an example of which is illustrated in the accompanying drawings.

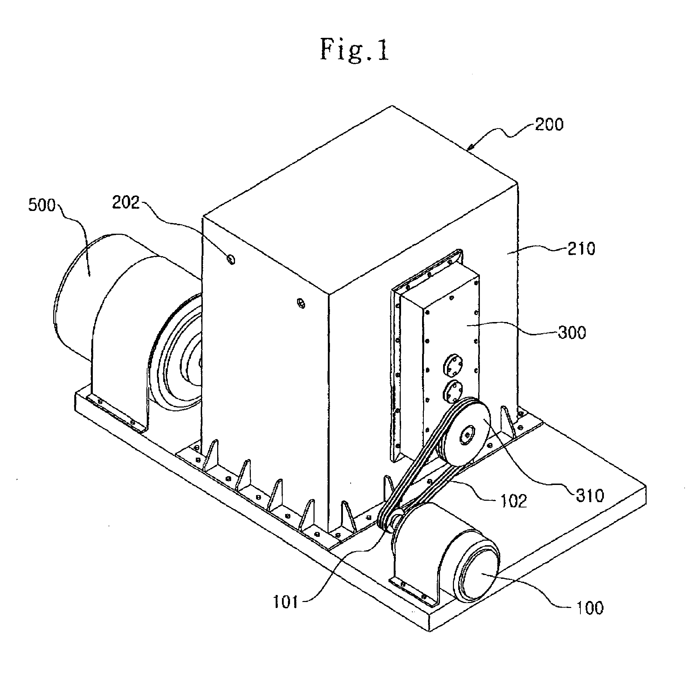

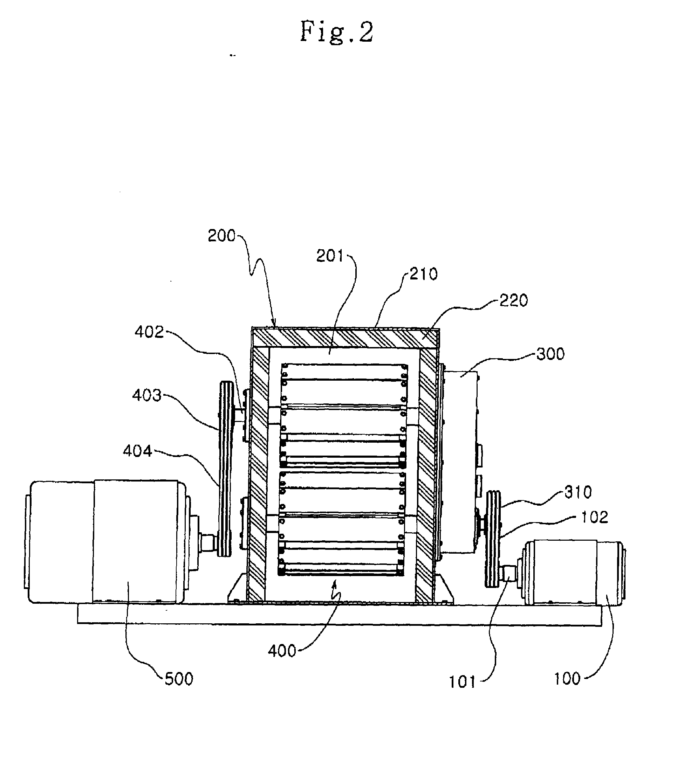

Fig. 1 is a perspective view of a turning force increasing apparatus using a magnetic force according to one preferred embodiment of the present invention, and Fig. 2 is a cross-sectional view of the apparatus shown in Fig. 1. As shown in the accompanying drawings, the turning force increasing apparatus is engaged at one side thereof with an electric motor 100 of a power source, and is enclosed by a case 200, with a space 201 interposed between the apparatus and the case.

The present invention employs the electric motor 100 as an external power source, but other external power source such as diesel engine, wind power or the like can be utilized. The connection to the diesel engine is widely known in the art.

The case 200 is provided at one side thereof with a power-transmitting member 300 for transmitting a turning force generated by the electric motor 100. A turning force increasing means 400 is disposed within the case 200 and increases the turning force generated by the electric motor 100.

The turning force increasing means 400 is coupled to an electric generator 500, increases the turning force of the electric motor and supplies the increased turning force to the electric generator 500, so that the electric generator 500 is driven by the increased force to generate the electric power.

The case 200 includes, as shown in Fig. 2, an external cover 210 made of stainless steel and an internal cover 220 made of wood disposed around an internal circumstance of the external cover 210.

Preferably, the case 200 has two holes 202 at an upper side surface thereof. The holes 202 are not limited to the number shown in Fig. 1, and the size and number of the holes 202 may be altered depending upon the size (i.e., magnitude of magnetic force) of magnets provided in the turning force increasing means 400 disposed within the case 200.

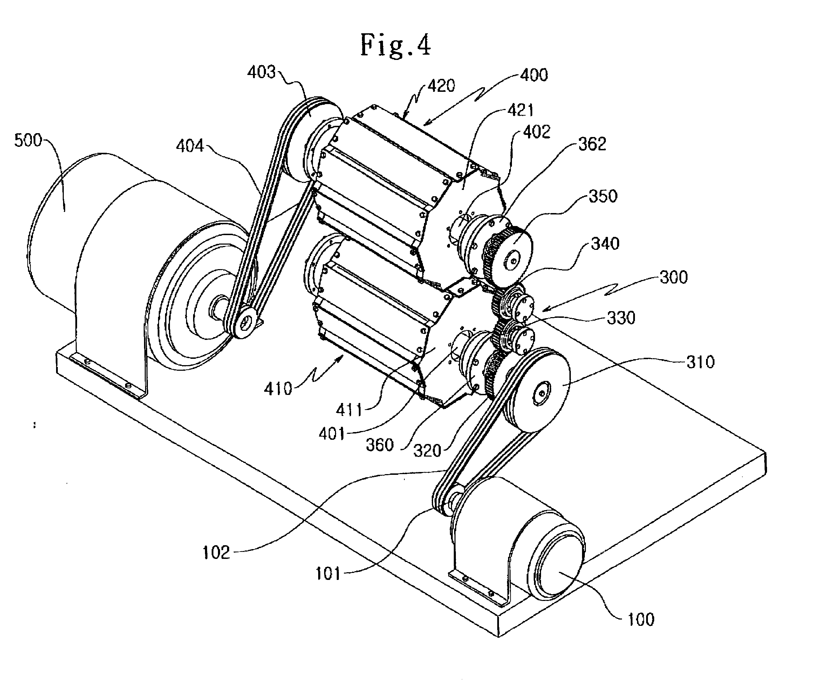

The power-transmitting member 300 includes, as shown in Fig. 4, a pulley 310 coupled to a shaft 101 of the electric motor 100 via a belt 102, a first gear 320 attached coaxially to the pulley 310, and second, third and fourth gears 330, 340 and 350 meshed to each other in a regular order..

The first gear 320 and the fourth gear 350 have bearings 360 and 362, respectively.

The power-transmitting member 300 is disposed within a cabinet made of plates to prevent the power-transmitting member 300 from being exposed.

The turning force increasing means 400, according to the present invention, includes a rotary driving member 410 driven by the pulley 310 and the first gear 320 engaged to a shaft 401 of the rotary driving member 410, and a rotary driven member 420 disposed to maintain a desired gap with the rotary driving member 410 and rotating with the rotary driving member 410.

Each of the rotary driving member 410 and the rotary driven member 420 includes a pair of covers 411 and 421 at both ends thereof, and each of the covers 411 and 421 has a plurality of flat portions 412 and 422 formed along an outer periphery.

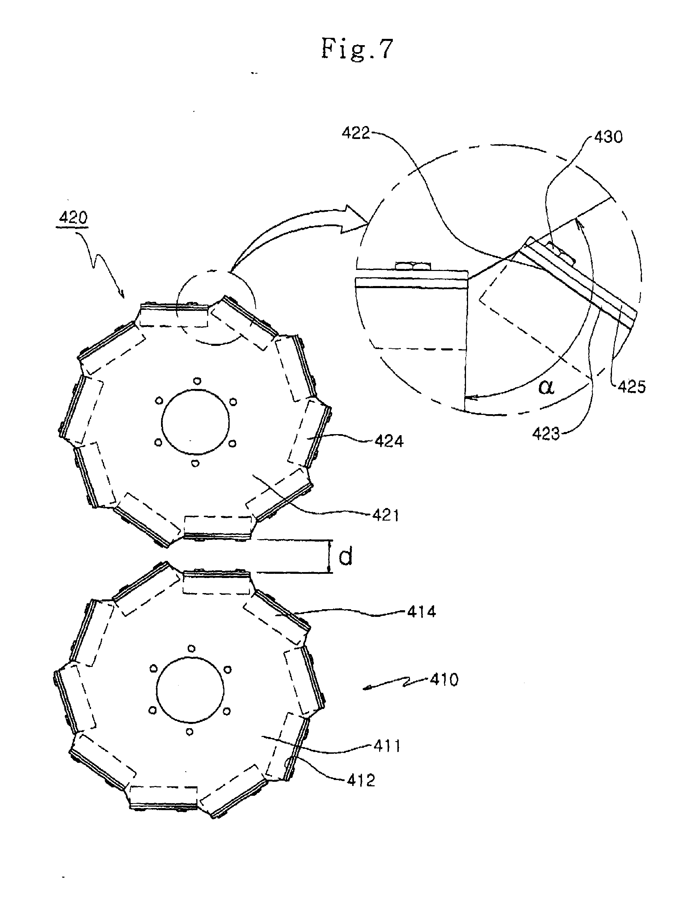

As shown in Fig. 7, the rotary driving member 410 and the rotary driven member 420 are disposed to maintain a desired gap D between them. If the gap D is too wide, the rotary power is not transmitted properly. If the gap D is too narrow, the rotating operation is impeded. Therefore, it is important to maintain the gap properly.

The pairs of covers 411 and 421 disposed at both ends of the respective rotary driving member 410 and the rotary driven member 420 are provided along an outer periphery with a plurality of flat portions 412 and 422. As shown in Fig. 7, each of the flat portions 412 and 422 is disposed at a desired angle α relative to adjacent flat portion. Preferably, the angle α is 122°, but is not limited to the value.

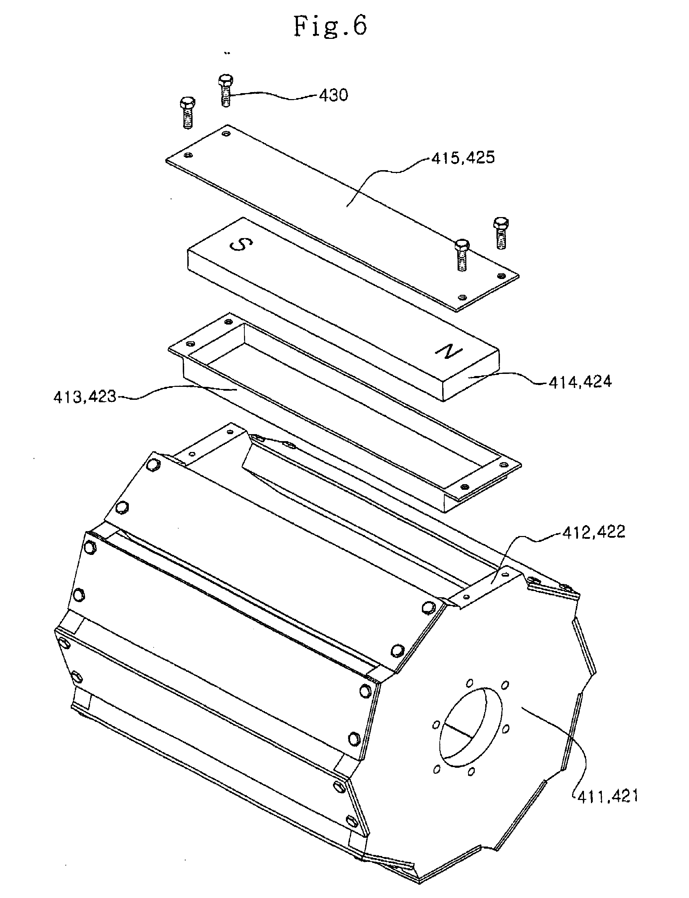

As shown in Fig. 6, receptacles 413 and 423 are disposed on the respective flat portions of the covers 411 and 421, and magnets 414 and 424 are accommodated within the receptacles 413 and 423. Opened sides of the receptacles 413 and 423 are closed by cover plates 415 and 425, and the cover plates 415 and 425 are fastened to the receptacles 413 and 423 with bolts 430.

The cover plates 415 and 425 may be integrally fixed to the receptacles 413 and 423 by a welding process, instead of the bolt fastening, after the magnets 414 and 424 are disposed therein. The receptacles 413 and 423 and the cover plates 415 and 425 are made of nonferrous metal such as stainless steel. Since the nonferrous metal has a property to allow the magnetic force to pass through, the radiation of the magnetic force generated from the magnets 414 and 424 accommodated within the receptacles 413 and 423, is not impeded to get through the receptacles. In addition, the magnets are not attracted to the receptacles when assembling the receptacles, thereby making assembling process easy.

Although ten magnets are accommodated in the respective receptacles herein, the number of the magnets is not limited thereto and is changed according to the capacity of the periphery force increasing means 400. It will be understood that the same number of magnets is disposed on the respective rotary driving member 410 and the rotary driven member 420.

The magnets disposed on the rotary driving member 410 and the rotary driven member 420 are arranged in such a way that the same polarities of the magnets are faced to each other to apply a repulsive force between the rotary driving member 410 and the rotary driven member 420.

The electric generator 500 is coupled to a pulley 403 fixed to a shaft 402 of the rotary driven member 420 through an endless belt 404 to receive the rotary power.

With the construction as described above, if the electric current is applied to the electric motor 100, the pulley 310 is rotated in one direction by the shaft 101 of the electric motor. As shown in Fig. 4, the rotary power is transferred to the meshed gear sets of first, second, third and fourth gears 320, 330, 340 and 350. Since the pulley 310 and the first gear 320 are attached on the same shaft 401, the rotation of the shaft 401 causes the rotary driving member 410 of the turning force increasing means 400 to rotate. The rotary driven member 420 spaced apart from the rotary driving member 410 is rotated by the rotation of the rotary driving member 410.

According to the rotation mechanism of the rotary driving member 410 and the rotary driven member 420 of the present invention as shown in Fig. 7, while rotating, the rotary driving member 410 arrives at a position where any one of magnets 414 disposed along an outer periphery of the rotary driving member 410 is positioned at a horizontal position faced to any one of magnets 424 of the rotary driven member 420, where the opposing magnet 414 and magnet 424 are repelled by the repulsive force, thereby generating the rotary power between the rotary driving member and the rotary driven member.

At that time, with the magnets 414 and 424 (permanent magnets) accommodated within the receptacles 413 and 423 respectively, and the cover plates 415 and 425 closed on the opened sides of the receptacles 413 and 423, the magnetic force radiates through the cover plates 415 and 425, and does not radiate in other directions except the direction of the cover plates 415 and 425.

If the magnetic force is radiated in every direction, it would be very difficult to assemble the apparatus since the magnets 414 and 424 adhere to anything. Therefore, the magnet is disposed in such a way that it radiates magnetic force only in one direction.

When the rotary driven member 420 is rotated, the gears provided at one side thereof are simultaneously rotated. Therefore, although the turning force of the electric motor 100 is small, the turning force can be increased by the turning force increasing means 400. The increased turning force is transmitted to the electric generator 500 via the pulley 403 and the belt 404, thereby generating the electric power.

The present invention includes the case 200 of a predetermined size, and the case 200 is formed with a plurality of holes 202 at one side thereof to ventilate. In addition, a part of the magnetic force is emitted through the holes.

If the holes 202 are not formed, the case 200 consisted of the external cover 210 and the internal cover 220 shields the external radiation of the magnetic force. Since the strong magnetic force is radiated within the case 200, the rotation of the turning force increasing means 400 is interrupted. Therefore, the holes are provided to prevent the above problem.

According to the present invention, since the small turning force of the electric motor 100 is increased by the turning force increasing means 400, the electric generator of higher capacity may be rotated by the increased force.

**Effect of the Invention**

The present invention can be attached to the external power source to increase the turning force transmitted from the external power source, and has the effect of operating larger capacity of generator with a relatively small capacity of external power source.

The forgoing embodiment is merely exemplary and is not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

**Claims**

1.  A turning force increasing apparatus using magnetic force to operate turning force increasing means, said turning force increasing means comprising:

    a rotary driving member to which turning force is transferred from a shaft thereof, said rotary driving member being formed with a pair of covers fixed at both ends thereof and a plurality of magnets disposed along the outer periphery thereof; and
    a rotary driven member disposed above said rotary driving member and rotated by magnetic force of said rotary driving member, said rotary driven member being formed with a pair of covers fixed at both ends thereof and a plurality of magnets disposed along the outer periphery thereof.

2.  The apparatus of claim 1, wherein each of said covers has a plurality of flat portions formed along a periphery.

3.  The apparatus of claim 1, wherein said rotary driving member and said rotary driven member are disposed to maintain a desired gap between them.

4.  The apparatus of claim 2, wherein each of said flat portions is disposed at a desired angle relative to adjacent flat portion.

5.  The apparatus of claim 4, wherein the angle is 122°.

6.  The apparatus of claim 1, wherein said magnets are accommodated within said receptacles respectively, and said receptacles are disposed respectively on said flat portions of said covers with opened sides of said receptacles closed by cover plates.

7.  The apparatus of claim 6, wherein said receptacles and said cover plates are made of nonferrous metal.

8.  The apparatus of claim 1, wherein said magnets disposed on said rotary driving member and said rotary driven member are arranged so that the same polarities of magnets are faced to each other to apply a repulsive force between said rotary driving member and said rotary driven member.

9.  The apparatus of claim 1 or 8, wherein same number of magnets are disposed on said rotary driving member and said rotary driven member.

10. The apparatus of claim 1 or 6, wherein said magnet is adapted to radiate the magnetic force through said cover plate only.

11. The apparatus of claim 1, further comprising a power-transmitting member for receiving a power from a power source and transmitting the turning force to said rotating driven member.

12. The apparatus of claim 11, wherein said power-transmitting member includes first to fourth gears, said first gear coaxially attached to said rotating driving member transmitting power from said first gear to said fourth gear, and said fourth gear coaxially attached to said rotating driven member.

13. The apparatus of claim 1, wherein said turning force increasing means is coupled to an electric motor to receive the power.

14. The apparatus of claim 1, wherein said turning force increasing means is coupled to a diesel engine to receive the power.

15. The apparatus of claim 13, wherein said rotary driving member has a pulley coupled to a shaft of said electric motor via a belt.

16. The apparatus of claim 1, wherein turning force increased by said turning force increasing means is transmitted to a power generator.

17. The apparatus of claim 16, wherein said rotary driven member has a pulley coupled to a shaft of said power generator via a belt.

**18.** The apparatus of claim 1, wherein said turning force increasing means is disposed within a case capable of shielding radiation of magnetic force.

**19.** The apparatus of claim 18, wherein said case includes an external cover and an internal cover.

**20.** The apparatus of claim 19, wherein said external cover is made of stainless steel, and said internal cover is made of wood.

**21.** The apparatus of in claim 18, wherein said case is formed with at least one hole for emitting magnetic force at one side thereof.

**22.** The apparatus of in claim 21, wherein the size and the number of said hole is altered depending upon the magnitude of magnets provided in said turning force increasing means disposed within said case.

Fig.1

200

210

300

310

102

100

101

202

500

Fig.2

# Fig.3

# Fig.4

EP 1 501 173 A2

EP 1 501 173 A2

Fig.5

11

# Fig.6

# Fig.7